# EUROPEAN PATENT SPECIFICATION

(11) **EP 3 353 508 B1**
(45) Date of publication and mention of the grant of the patent: **24.03.2021**
(21) Application number: 16849616.4
(22) Date of filing: 22.09.2016
(51) Int. Cl.: G01F 23/296, G01N 29/032

(54) **SYSTEM AND METHOD OF ULTRASOUND LIQUID LEVEL DETECTION**
SYSTEM UND VERFAHREN ZUR ULTRASCHALLFLÜSSIGKEITSSTANDERKENNUNG
SYSTÈME ET PROCÉDÉ DE DÉTECTION DE NIVEAU DE LIQUIDE À ULTRASONS

(30) Priority: 22.09.2015 US 201562221620 P
(43) Date of publication of application: 01.08.2018
(73) Proprietor: Gems Sensors, Inc., Plainville, Connecticut 06062 (US)
(72) Inventor: LABARGE, Bryan M., Plainville, Connecticut 06062 (US); DOCKENDORFF, James B., Plainville, Connecticut 06062 (US)
(74) Representative: Gray, James
(86) International application number: PCT/US2016/053159
(87) International publication number: WO 2017/053598

(56) References cited:
- DE-A1- 4 320 039
- US-A- 5 793 705
- US-A1- 2002 083 766
- US-A1- 2002 083 766
- US-A1- 2004 173 021
- US-A1- 2006 137 447
- US-A1- 2009 183 564
- US-A1- 2011 219 871

## Description

### FIELD OF THE INVENTION

The present disclosure relates generally to level indicators and, more particularly, to an improved ultrasonic liquid level detection system.

### BACKGROUND

Ultrasonic switches typically use inaudible high-frequency sound (ultrasound) to detect the presence (or lack thereof) of a liquid at a predetermined point. Generally such devices include an electronic control unit and a sensor. Liquid level is detected by the ultrasonic level switches using the physical properties of sound transmission in vapor and liquids. In particular, sound that travels in air loses a significant amount of its signal strength. However, the same sound when traveling in liquid retains almost all of its signal strength.

Known liquid level detection system generally require two piezoelectric crystals, where each crystal is mounted on one side of a gap in a sensor. The first crystal transmits sound and the second crystal receives sound. To detect liquid level, it must first be determined whether liquid or gas (air) is present in the gap. As described above, if liquid is present, a relatively high signal strength sound is received at the detection side. If gas is present, only a small amount of sound is received. The electronics used for processing the signals are configured to detect the difference in sound/signal level and respond accordingly.

Unfortunately, a significant limitation in the systems described is the requirement of dual piezoelectric crystals or piezoceramic elements to transmit and receive ultrasonic energy across a specified distance. Such a configuration results in a more complex and expensive device to make and sell. There have been attempts at using only a single crystal configuration. For example, U.S. Patent No. 5,808,200 describes a method of reflecting ultrasound energy using one crystal.

The present invention recognizes and addresses considerations of prior art constructions and methods. DE-A-4320039 discloses a method and a device for determining the presence and/or for measuring the properties of solid or liquid materials in a space between opposite walls or wall sections. US2002/083766 discloses a built-in test system for an ultrasonic liquid level sensor that includes a transducer assembly having an ultrasonic transducer, and a switch that will be actuated when the ultrasonic transducer is in intimate contact with a surface of a tank in which level is to be determined. US2009/183564 discloses an ultrasonic liquid level detector for use within a shielded container.

### SUMMARY

The invention concerns a liquid detection system for determining a presence of a liquid including a single piece housing and a piezoelectric element that outputs a first ultrasonic signal in response to an input electrical signal. The piezoelectric element is disposed inside the single piece housing. The single piece housing comprises a first surface within said single piece housing and a second surface disposed on opposite sides of a portion of the housing, a third surface disposed opposite the second surface across a gap in the housing, and a fourth surface and a fifth surface extending between the second surface and the third surface. The fourth surface and the fifth surface constitue supports connecting the second and third surface. The first surface, the second surface and the third surface are parallel to each other and the fourth surface and the fifth surface are parallel to each other. The first and second surfaces are situated above the third surface. The piezoelectric element is coupled to the first surface of the housing so that the piezoelectric element directs the first ultrasonic signal toward the second surface, and the gap in the housing is in liquid communication with a surrounding environment so that when liquid from the surrounding environment is present in the gap completely between the second surface and the third surface, the third surface of the housing reflects a second ultrasonic signal in response to the first ultrasonic signal when the liquid is present in the gap.

The accompanying drawings, which are incorporated in and constitute a part of this specification, illustrate one or more embodiments of the invention and, together with the description, serve to explain the principles of the invention.

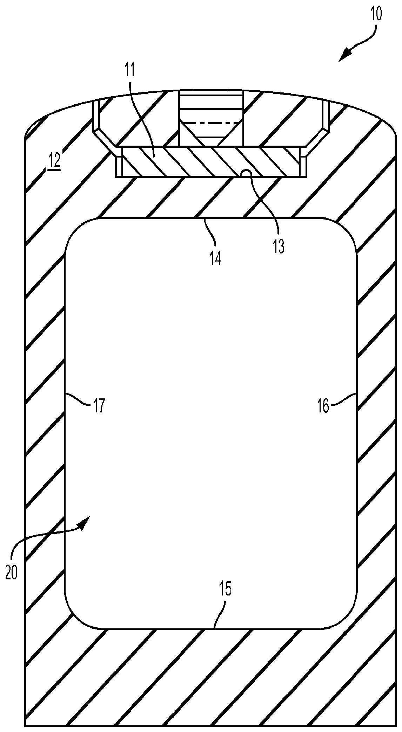

### BRIEF DESCRIPTION OF THE DRAWING

A full and enabling disclosure of the present invention, including the best mode thereof, directed to one of ordinary skill in the art, is set forth in the specification, which makes reference to the appended drawing, in which:

The drawing is a partial cross-sectional view of liquid detection system in accordance with an embodiment of the present disclosure.

Repeat use of reference characters in the present specification and drawing is intended to represent same or analogous features or elements of the invention according to the disclosure.

### DETAILED DESCRIPTION OF THE PREFERRED EMBODIMENTS

Reference will now be made in detail to presently preferred embodiments of the invention, one or more examples of which are illustrated in the accompanying drawings. Each example is provided by way of explanation, not limitation, of the invention. In fact, it will be apparent to those skilled in the art that modifications and variations can be made in the present invention without departing from the scope thereof. For instance, features illustrated or described as part of one embodiment may be used on another embodiment to yield a still further embodiment. Thus, it is intended that the present invention covers such modifications and variations as come within the scope of the appended claim.

In order to provide an improved liquid level detection system and to overcome the disadvantages and problems of currently available devices, there is provided an ultrasonic liquid level detection system configured such that the gap between reflecting surfaces enables the ultrasound energy to be reflected across a wet gap instead of a dry gap. In other words, the gap is bridged by a liquid to allow the ultrasound energy to be transmitted and reflected between the two reflecting surfaces. In an exemplary embodiment, the reflection surfaces are parallel to each other. Advantageously, the distance between the surfaces does not need to be of any certain fixed distance. A particular benefit of the presently described system is the significantly reduced cost and labor of assembly. Still another advantage is the increased ruggedness and resistance to damage from being dropped or otherwise impacted.

Turning now to the drawing, an exemplary embodiment of a liquid detection system 10 is shown in greater detail. The system includes a piezoelectric element 11 placed inside a housing 12. The piezoelectric element 11 and the housing 12 are placed in contact with each other along a flat first surface 13. The piezoelectric element 11 and the housing 12 are coupled acoustically to each other with an interstitial material. The housing 12 includes several surfaces 13, 14, 15, 16 and 17.

The piezoelectric element 11 produces ultrasonic energy when an electric field acts upon it, which is directed from the first surface 13 to a second surface 14. The first surface 13 is parallel to the second surface 14. The ultrasound energy then passes through a gap 20 between the second surface 14 and the third surface 15 only if the gap 20 between them contains liquid and the liquid bridges the gap 20 completely between the second surface 14 and the third surface 15. If the gap 20 between the second surface 14 and the third surface 15 contains any air, the ultrasound energy is not reflected by the third surface 15. If liquid is bridging the second surface 14 and the third surface 15, the ultrasound energy is reflected off the third surface 15 and sent back towards to the second surface 14.

The second surface 14 and the third surface 15 are parallel to each other. Once the ultrasound energy reaches the second surface 14, it is directed towards the first surface 13 and reaches the piezoelectric element 11. When the ultrasound energy interacts with the piezoelectric element 11, the piezoelectric element 11 converts the ultrasound energy back into electrical energy that can be used by an outside electronics processor. Note that the fourth surface 16 and fifth surface 17 are used as supports connecting the second surface 14 and the third surface 15. These surfaces are parallel to each other, but they cannot interfere with the ultrasound energy passing back and forth from the second and third surfaces. The presence of ultrasound energy (or the lack thereof) is thus the detection mechanism processed by the outside electronics processor.

An advantage of making the housing as one piece, as opposed to multiple pieces, eliminates or reduces any assembly and labor costs. Cost savings are also realized by not having to purchase the second part. Structurally, from a performance perspective, the one piece design eliminates any misalignment between the parallel surfaces that may occur when assembling multiple pieces together. As the surfaces approach parallelism, there is more acoustic (and thus electronic) signal amplitude for electronics to process. This translates to a more reliable sensor since it is much easier for an electronic circuit to detect higher voltages than low voltages.

Variations and alternate embodiments of the new and novel system described herein are possible. For example, the distance between the second surface 14 and the third surface 15 may be fixed, but the value of the distance is not required to be a specific value.

In an unclaimed example, the second surface 14 and third surface 15 are not required to be included as part of the housing 12. If the third surface 15 is not part of the housing 12, then the second surface 14 and the third surface 15 must be parallel to the other.

Another unclaimed variation of the innovation allows that any variation in distance between the second surface 14 and the third surface 15 could be a detectable occurrence by measuring the time between the initial signal creation by the piezoelectric element 10 and the return signal reflected by the third surface 15.

While one or more preferred embodiments of the invention are described above, it should be appreciated by those skilled in the art that various modifications and variations can be made in the present invention without departing from the scope thereof. It is intended that the present invention cover such modifications and variations as come within the scope of the appended claim.

## Claims

1. A liquid detection system (10) for determining a presence of a liquid, comprising:
a piezoelectric element (11) that outputs a first ultrasonic signal in response to an input electrical signal, said piezoelectric element (11) disposed inside a single piece housing (12); and
said single piece housing (12) comprising a first surface (13) within said single piece housing (12) and a second surface (14) disposed on opposite sides of a portion of the housing (12), a third surface (15) disposed opposite the second surface (14) across a gap (20) in the housing (12), and a fourth surface (16) and a fifth surface (17) extending between the second surface (14) and the third surface, wherein the fourth surface (16) and the fifth surface (17) constitute supports connecting the second surface (14) and third surface (15) of the housing (12), and wherein the first surface (13), the second surface (14) and the third surface (15) are parallel to each other and wherein the fourth surface (16) and fifth surface (17) are parallel to each other, and wherein the first surface (13) and second surface (14) are situated above the third surface (15);
wherein the piezoelectric element (11) is coupled to the first surface (13) of the housing (12) so that the piezoelectric element (11) directs the first ultrasonic signal toward the second surface (14), and
wherein the gap (20) in the housing (12) is in liquid communication with a surrounding environment so that when liquid from the surrounding environment is present in the gap (20) completely between the second (14) and third surfaces (15), the third surface (15) of the housing (12) reflects a second ultrasonic signal in response to the first ultrasonic signal when the liquid is present in the gap (20).

## Patentansprüche

1. Flüssigkeitserkennungssystem (10) zum Bestimmen eines Vorhandenseins einer Flüssigkeit, umfassend:
ein piezoelektrisches Element (11), das in Abhängigkeit von einem elektrischen Eingangssignal ein erstes Ultraschallsignal ausgibt, wobei das piezoelektrische Element (11) im Inneren eines einteiligen Gehäuses (12) angeordnet ist; und
das einteilige Gehäuse (12) umfasst eine erste Fläche (13) in dem einteiligen Gehäuse (12) und eine zweite Fläche (14), die auf gegenüberliegenden Seiten eines Abschnitts des Gehäuses (12) angeordnet sind, eine dritte Fläche (15), die gegenüberliegend der zweiten Fläche (14) über eine Lücke (20) im Gehäuse (12) angeordnet ist, und eine vierte Fläche (16) sowie eine fünfte Fläche (17), die sich zwischen der zweiten Fläche (14) und der dritten Fläche erstrecken, wobei die vierte Fläche (16) und die fünfte Fläche (17) Stützen bilden, die die zweite Fläche (14) und die dritte Fläche (15) des Gehäuses (12) verbinden, und wobei die erste Fläche (13), die zweite Fläche (14) und
die dritte Fläche (15) parallel zueinander verlaufen, und wobei die vierte Fläche (16) und die fünfte Fläche (17) parallel zueinander verlaufen, und wobei die erste Fläche (13) und die zweite Fläche (14) oberhalb der dritten Fläche (15) gelegen sind;
wobei das piezoelektrische Element (11) mit der ersten Fläche (13) des Gehäuses (12) so gekoppelt ist, dass das piezoelektrische Element (11) das erste Ultraschallsignal zur zweiten Fläche (14) lenkt, und
wobei die Lücke (20) im Gehäuse (12) in Flüssigkeitskommunikation mit seiner Umgebung steht, so dass, wenn Flüssigkeit aus der Umgebung in der Lücke (20) vollständig zwischen der zweiten (14) und dritten Fläche (15) vorhanden ist, die dritte Fläche (15) des Gehäuses (12) in Abhängigkeit von dem ersten Ultraschallsignal ein zweites Ultraschallsignal reflektiert, wenn die Flüssigkeit in der Lücke (20) vorhanden ist.

## Revendications

1. Système de détection de liquide (10) pour déterminer la présence d'un liquide, comprenant :
un élément piézoélectrique (11) qui produit un premier signal ultrasonique en réponse à un signal électrique d'entrée, ledit élément piézoélectrique (11) étant disposé à l'intérieur d'un logement d'une seule pièce (12) et
ledit logement d'une seule pièce (12) comprenant une première surface (13) dans ledit logement d'une seule pièce (12) et une seconde surface (14) disposée sur les faces opposées d'une portion du logement (12), une troisième surface (15) disposée à l'opposé de la seconde surface (14) de l'autre côté d'un intervalle (20) dans le logement (12), et une quatrième surface (16) et une cinquième surface (17) s'étendant entre la seconde surface (14) et la troisième surface, dans lequel la quatrième surface (16) et la cinquième surface (17) constituent des supports connectant la seconde surface (14) et la troisième surface (15) du logement (12), et dans lequel la première surface (13), la seconde surface (14) et la troisième surface (15) sont parallèles l'une par rapport à l'autre et dans lequel la quatrième surface (16) et la cinquième surface (17) sont parallèles l'une par rapport à l'autre, et dans lequel la première surface (13) et la seconde surface (14) sont situées au-dessus de la troisième surface (15) ;
dans lequel l'élément piézoélectrique (11) est couplé à la première surface (13) du logement (12) de façon que l'élément piézoélectrique (11) dirige le premier signal ultrasonique vers la seconde surface (14) et
dans lequel l'intervalle (20) dans le logement (12) est en communication liquide avec un environnement l'entourant de façon que lorsque le liquide de l'environnement l'entourant est présent dans l'intervalle (20) complètement entre la seconde (14) et la troisième surfaces (15), la troisième surface (15) du logement (12) reflète un second signal ultrasonique en réponse au premier signal ultrasonique lorsque le liquide est présent dans l'intervalle (20).
